(19) Europäisches Patentamt
European Patent Office
Office européen des brevets

(11) EP 3 608 348 A1

(12) # EUROPÄISCHE PATENTANMELDUNG

(43) Veröffentlichungstag:
**12.02.2020 Patentblatt 2020/07**

(21) Anmeldenummer: **18187627.7**

(22) Anmeldetag: **07.08.2018**

(51) Int Cl.:
***C08G 64/02*** *(2006.01)* ***C08G 64/34*** *(2006.01)*
***C08G 64/42*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG EINES ORGANOOXYSILYL-VERNETZTEN POLYMERS**

(57) Die vorliegende Erfindung betrifft ein Verfahren zur Herstellung eines Organooxysilyl-vernetzten Polymers umfassend die Reaktion eines Kohlenstoff-Kohlenstoff-Doppelbindungen enthaltenden Polyethercarbonatpolyols mit einer Polysiloxanverbindung in Gegenwart eines Katalysators (A), wobei die Polysiloxanverbindung mindestens zwei Si-H Bindungen aufweist. Ein weiterer Gegenstand sind Organooxysilyl-vernetzte Polymere erhältlich durch das erfingungsgemäße Verfahren.

EP 3 608 348 A1

## Beschreibung

Die vorliegende Erfindung betrifft ein Verfahren zur Herstellung eines Organooxysilyl-vernetzten Polymers umfassend der Reaktion eines Kohlenstoff-Kohlenstoff Doppelbindungen enthaltenden Polyethercarbonatpolyols, mit einer Polysiloxanverbindung in Gegenwart eines Katalysators (A), wobei die Polysiloxanverbindung mindestens zwei Si-H Bindungen aufweisen. Ein weiterer Gegenstand sind Organooxysilyl-vernetzten Polymere erhältlich durch das erfingungsgemäße Verfahren.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

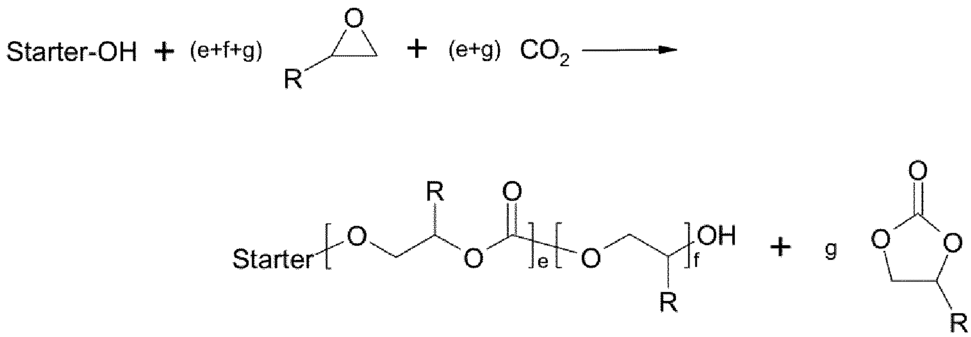

(I)

EP 2 845 872 A1 offenbart ein Verfahren zur Herstellung von Polyethercarbonatpolyolen mit Seitenketten umfassend die Schritte: (α) Vorlegen eines Katalysators und: (αα) eines Suspensionsmittels, das keine H-funktionellen Gruppen enthält und/oder (αβ) einer H-funktionellen Starterverbindung; (γ) Zudosieren von Kohlendioxid und mindestens zweier Alkylenoxide, wobei diese Alkylenoxide von dem im Schritt (β) zudosierten Alkylenoxid oder zudosierten Alkylenoxiden gleich oder verschieden sein können, wobei die Differenz des Molekulargewichts des leichtesten und des schwersten der in der Stufe (γ) zudosierten Alkylenoxide größer oder gleich 24 g/mol beträgt und das leichteste Alkylenoxid ein C2-C4-Alkylenoxid ist und wobei weiterhin für den Fall, dass in Schritt (α) keine H-funktionelle Starterverbindung vorgelegt wurde, Schritt (γ) das Zudosieren einer H-funktionellen Starterverbindung umfasst. Beansprucht wird ferner die Verwendung des Polyethercarbonatpolyols als vernetzbare Komponente innerhalb einer Vernetzungsreaktion zur Herstellung duromerer oder elastomerer Netzwerke.

Ungesättigte PolyethercarbonatPolyole sind über ihre Doppelbindungen vernetzbar. So offenbart WO 2015/032645 A1 ein Verfahren zur Herstellung Mercapto-vernetzter Polyethercarbonate, wobei Doppelbindungen enthaltende Polyethercarbonatpolyole mit polyfunktionellen Mercaptanen unter Einwirkung von Initiatorverbindungen zur Reaktion gebracht werden.

Eine andere denkbare Quervernetzungsreaktion ist die Umsetzung der ungesättigten Polyethercarbonatpolyole mit Radikalstartern. Für einen Einsatz der ungesättigten Polyethercarbonatpolyole in der Herstellung von Elastomeren ist jedoch ihr nach dem heutigen Stand erreichbares Molekulargewicht mindestens um den Faktor 10 zu niedrig. Dieses ist insbesondere dann der Fall, wenn bei den hieraus hergestellten Polyurethanen die Doppelbindungen zunächst noch intakt bleiben sollen. Die Polyethercarbonatpolyole lassen sich nicht direkt auf Maschinen, die in der Herstellung von Elastomeren eingesetzt werden, verarbeiten, das die derzeit verfügbaren Polyethercarbonatpolyole flüssige Verbindungen mit hoher Adhäsion auf Metalloberflächen sind.

Es ist wünschenswert, die Herstellung von Elastomeren in einem zweistufigen Verfahren durchzuführen. In einem ersten Schritt wird eine Elastomer-Vorstufe bereitgestellt, welche noch nicht zu einem festen dreidimensionalen Netzwerk reagiert hat und daher auf Maschinen verarbeitbar und insbesondere formbar ist. In dem sich daran anschließenden Vernetzungsschritt wird dann das Elastomer erhalten.

Die vorliegende Erfindung hat sich die Aufgabe gestellt, ein Verfahren zur Herstellung einer Elastomer-Vorstufe bereitzustellen, bei dem ungeachtet ihres Molekulargewichts derzeit verfügbare Polyethercarbonatpolyole eingesetzt werden können und bei dem unter Verzicht auf eine Anbindung über Siloxanbrücken eine gute Kompatibilität des Polyethercarbonats mit Füllstoffen erreicht werden kann.

Erfindungsgemäß gelöst wurde die Aufgabe durch ein Verfahren zur Herstellung eines Organooxysilyl-vernetzten Polymers umfassend der Reaktion eines Kohlenstoff-Kohlenstoff Doppelbindungen enthaltenden Polyethercarbonatpolyols, mit einer Polysiloxanverbindung in Gegenwart eines Katalysators (A), wobei die Polysiloxanverbindung mindestens zwei Si-H Bindungen aufweisen.

*Polysiloxanverbindung*

Als Polysiloxanverbindung im Sinne der Erfindung wird eine Verbindung verstanden, die $\geq$ 2 Si-H Gruppen enthält. Bevorzugte Verbindungen sind Silikonöle mit der allgemeinen Summenformel $[R^1R^2SiO]_n$, die $\geq$ 2 Si-H Gruppen enthalten. Die Si-H Gruppen können als terminale Gruppen enthalten sein ($\alpha$,$\omega$-eine $\alpha$-$\omega$ Polysiloxanverbindung), entlang der Siloxankette enthalten sein oder an Seitenketten gebunden sein.

In einer bvorzugten Ausführungsform des Verfahrens ist die Polysiloxanverbindung eine $\alpha$-$\omega$ Polysiloxanverbindung.

In einer bevorzugten Ausführungsform des Verfahrens weist die $\alpha$-$\omega$ Polysiloxanverbindung eine Struktur gemäß Formel (I) auf:

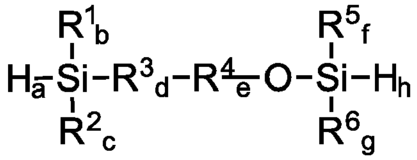

(I)

mit 1 $\geq$ a $\leq$ 3; 1 $\geq$ h $\leq$ 3; a+b+c=3, f+g+h=3; $R^1$, $R^2$, $R^5$, $R^6$ unabhängig voneinander = Alkyl, Aryl, Cycloalkyl bevorzugt: Alkyl, besonders bevorzugt, Me, Et, Pr; $R^3$ = O-Si$R^7R^8$; $R^7$, $R^8$ unabhängig voneinander = Alkyl, Aryl, Cycloalkyl bevorzugt: Alkyl, besonders bevorzugt, Me, Et, Pr; d=1 bis 100; bevorzugt 5 bis 80; $R^4$ = O-Si$R^9R^{10}$; $R^9$, $R^{10}$ unabhängig voneinander = Wasserstoff, Alkyl, Aryl, Cycloalkyl bevorzugt Wasserstoff, Alkyl, besonders bevorzugt Wasserstoff, Me, Et, Pr; e=1 bis 100; bevorzugt 5 bis 80.

Hierbei können die Reste $R^3$ und $R^4$ in den oben definierten Wiederholungseinheiten d und e unabhängig voneinander statistisch, alternierend oder blockweise zueinander auftreten.

In einer besonders bvorzugten Ausführungsform des Verfahrens ist $R^1$=$R^2$=$R^3$=$R^4$=$R^5$=Me; $R^7$=$R^8$=Me; $R^9$= Wasserstoff; $R^{10}$= Me; d= 10 bis 60; e= 10 bis 60.

*Polyethercarbonatpolyol*

Soweit nicht anders angezeigt bedeutet der Begriff "Doppelbindung" im Kontext der vorliegenden Anmeldung eine Kohlenstoff-Kohlenstoff-Doppelbindung, welche nicht Bestandteil eines aromatischen Systems ist.

Im Rahmen des erfindungsgemäßen Verfahrens sind unter Polyethercarbonatpolyolen auch Polyethercarbonatpolyole, Polyetherpolyestercarbonatpolyole und/oder Polycarbonatpolyole zu verstehen.

In einer weiteren Ausgestaltung des erfindungsgemäßen Verfahrens weist das Kohlenstoff-Kohlenstoff Doppelbindungen enthaltende Polyethercarbonatpolyol einen Gehalt an Kohlenstoff-Kohlenstoff Doppelbindungen von 0,5 Gew.-% bis 17,0 Gew.-%, bevorzugt von 1,0 Gew.-% bis 6,0 Gew.-% auf.

Der Gehalt an Kohlenstoff-Kohlenstoff Kohlenstoff-Kohlenstoff Doppelbindungen, im Polyethercarbonatpolyol ergibt sich für das Kohlenstoff-Kohlenstoff Doppelbindungen, enthaltende Polyethercarbonatpolyol als der Quotient des angegebenen Doppelbindungsgehalts der eingesetzten Polyethercarbonatpolyole angegeben in $C_2H_2$ Äquivalenten pro Masse Gesamtmasse des Polyethercarbonatpolyols und ist in $C_2H_2$ Äquivalenten pro Masse Polyethercarbonatpolyol angegeben.

In einer weiteren Ausgestaltung des erfindungsgemäßen Verfahrens weist das Kohlenstoff-Kohlenstoff Doppelbindungen enthaltende Polyethercarbonatpolyol einen $CO_2$ Anteil von 0,5 Gew.-% bis 50 Gew.-%, bevorzugt von 5 Gew.-% bis 25 Gew.-%, auf.

In einer weiteren Ausgestaltung des erfindungsgemäßen Verfahrens ist das Kohlenstoff-Kohlenstoff Doppelbindungen enthaltende Polyethercarbonatpolyol erhältlich durch Anlagerung eines Alkylenoxids, mindestens eines Kohlenstoff-Kohlenstoff Doppelbindungshaltigen Monomers und $CO_2$ an eine H-funktionelle Starterverbindung in Gegenwart eines Doppelmetallcyanidkatalysators.

In dem erfindungsgemäßen Verfahren können als Alkylenoxide Alkylenoxide mit 2-45 Kohlenstoffatomen eingesetzt werden. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Alkylenoxide von C6-C22 $\alpha$-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise werden als Alkylenoxide Ethylenoxid und/oder Propylenoxid, insbesondere Propylenoxid eingesetzt werden. Werden Ethylenoxid und Propylenoxid in Mischung eingesetzt, so beträgt das molare Verhältnis EO/PO 1:99 bis 99:1, bevorzugt 5:95 bis 50:50. Werden Ethylenoxid und/oder Propylenoxid in Mischung mit anderen ungesättigten Alkylenoxiden eingesetzt, eingesetzt, so beträgt ihr Anteil 1 bis 40 mol-%, bevorzugt 2 bis 20 mol-%

Als Katalysator für die Herstellung der erfindungsgemäßen Polyethercarbonatpolyole kann beispielsweise ein DMC-Katalysator (Doppel-Metall-Cyanid-Katalysator) eingesetzt. Es können zusätzlich oder alternativ auch andere Katalysatoren eingesetzt werden. Für die Copolymerisation von Alkylenoxiden und $CO_2$ können beispielsweise zusätzlich oder alternativ Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Es ist bevorzugt, dass der Katalysator ein DMC-Katalysator ist.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (II) auf,

$$M(X)_n \qquad (II),$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (III) auf,

$M_r(X)_3$ (III)

, wobei

M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (IV) auf,

$M(X)_s$ (IV),

wobei

M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (V) auf,

$M(X)_t$ (V),

wobei

M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze weisen bevorzugt eine Zusammensetzung nach der allgemeinen Formel (VI) auf

$(Y)_aM'(CN)_b(A)_c$ (VI),

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VII)

$$M_x[M'_{x'}(CN)_y]_z \qquad (VII),$$

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist

x = 3, x'= 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha$,$\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen

Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Für die Herstellung der erfindungsgemäßen Polyethercarbonatpolyole wird weiterhin mindestens eine H-funktionelle Starterverbindung eingesetzt.

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-*tert*-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des Weiteren können als H-funktionelle Startersubstanzen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

In einer weiteren Ausführungsform der Erfindung können Polyethercarbonatpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4

auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel (VIII),

$$HO\text{-}(CH_2)_X\text{-}OH \qquad (VIII)$$

wobei x eine Zahl von 1 bis 20, bevorzugt eine gerade Zahl von 2 bis 20 ist. Beispiele für Alkohole gemäß Formel (VII) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (VII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

Das erfindungsgemäß verwendete $CO_2$ muss einen Reinheitsgrad von mindestens 80%, vorzugsweise von mindestens 95%, aufweisen, wobei der Anteil schwefelhaltiger Verunreinigungen, wie COS oder $SO_2$ unter 1 Gew.-%, vorzugsweise unter 0,1 Gew.-%, liegen muss. Es wird vorzugsweise $CO_2$ verwendet, das als Nebenprodukt bei der Ammoniakherstellung, der Ethylenoxidherstellung, durch die Wassergas-shift-Reaktion, bei Verbrennungsprozessen, vorzugsweise in Kraftwerken, oder beim Kalkbrennen anfällt. Gegebenenfalls müssen Reinigungsschritte folgen, bei denen insbesondere schwefelhaltige Verunreinigungen, aber auch Kohlenmonoxid entfernt werden. Inerte Gase, wie Stickstoff oder Argon dürfen bis zu einem Gehalt von unter 20%, vorzugsweise von unter 5%, enthalten sein. Besonders bevorzugt wird $CO_2$ verwendet, das als Nebenprodukt bei der Ammoniakherstellung anfällt oder durch Wassergas-shift-Reaktion hergestellt wird, da $CO_2$ aus diesen Quellen besonders niedrige Gehalte an schwefelhaltigen Verunreinigungen aufweisen.

In einer weiteren Ausgestaltung des Verfahrens wird das Kohlenstoff-Kohlenstoff Doppelbindungshaltige Monomer ausgewählt wird aus mindestenes einem der Monomere aus einer oder mehrerer der Gruppen bestehend aus

(a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren wie besipeislweise Ölsäure, Linolsäure, Konjuenfettsäure, oder Linolensäure, teilweise epoxidierte Fette und Öle, wie teilweise epoxidiertes Sojaöl, Leinöl, Rapsöl, Palmöl oder Sonnenblumenöl, und/oder deren Mischungen.

(b) Alkylenoxid mit Doppelbindung der allgemeinen Formel (IX) ist:

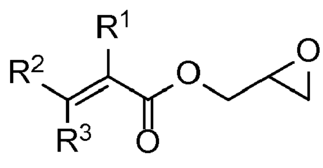

(IX)

wobei $R_1$ bis $R_3$ unabhängig voneinander H, Halogen, substituierte oder nicht-substituierte C1-C22-Alkyl, substituierte oder nicht-substituierte C6-C12 Aryl sind. Die Verbindungen nach obiger Formel (IX) zeigen als bevorzugte Vertreter der Gruppe der Glycidylester α,β-ungesättigter Säuren ein Substitutionsmuster, welches sich in besonderer Weise zum Aufbau von Polyethercarbonatpolyolen mit ungesättigten Gruppen eignet. Diese Verbindungsklasse lässt sich mittels des erfindungsgemäß einsetzbaren DMC-Katalysators mit hohen Ausbeuten zu Polyethercarbonatpolyolen mit ungesättigten Gruppen umsetzten. Des Weiteren können sich durch die sterischen und elektronischen Voraussetzungen im Bereich der Doppelbindung, gute Möglichkeiten zur weiteren Umsetzung zu höhermolekularen, vernetzten Polyethercarbonatpolyolen ergeben.

(c) cyclisches Anhydrid der Formel (X), (XI) oder (XII) entspricht:

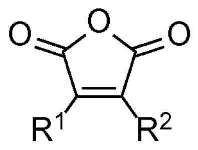

(X)

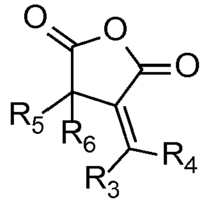

(XI)

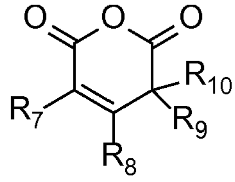

,

(XII)

wobei $R_1$ bis $R_{10}$ unabhängig voneinander H, Halogen, substituierte oder nicht-substituierte C1-C22-Alkyl, substituierte oder nicht-substituierte C6-C12 Aryl sind. Bevorzugte Verbindungen der Formel (IX), (X) (XI) sind Maleinsäureanhydrid, Halogen- oder Alkylsubstituierte Maleinsäureanhydride und Itaconsäureanhydrid.
und

(d) 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenylbernsteinsäureanhydrid und Octadecenylbernsteinsäureanhydrid.

In einer weiteren Ausgestaltung des Verfahrens wird das Kohlenstoff-Kohlenstoff Doppelbindungshaltige Monomer ausgewählt wird aus mindestenes einem der Monomere aus einer oder mehrerer der Gruppen bestehend aus

(a) Allylglycidylether, Vinylcyclohexenoxid und Limonenoxid
(b) Glycidylacrylat und Glycidylmethacrylat,
(c) Maleinsäureanhydrid und Itaconsäureanhydrid
und
(d) 4-Cyclohexen-1,2-disäureanhydrid und 5,6-Norbornen-2,3-disäureanhydrid.

In einer weiteren Ausführungsform des erfindungsgemäßen Verfahrens wird das Kohlenstoff-Kohlenstoff Doppelbindungshaltige Monomer ausgewählt wird aus Maleinsäureanhydrid und/oder Allylglycidylether bevorzugt Allylglycidylether.

Das molare Verhältnis der eingesetzten gesättigten Alkylenoxide zu dem mindestens einen weiteren Kohlenstoff-Kohlenstoff Doppelbindungshaltigen Monomer beträgt von 55,0 mol-% bis 99,5 mol-%, bevorzugt von 60,0 mol-% bis 99,0 mol-%.

Das mindestens eine weitern Kohlenstoff-Kohlenstoff Doppelbindungshaltigen Monomer kann statistisch oder blockweise in den Kohlenstoff-Kohlenstoff Doppelbindungen enthaltenden Polyethercarbonatpolyolen verteilt sein. Auch Gradientenpolymere sind einsetzbar.

Der Begriff Terpolymerisation im Sinne der Erfindung beinhaltet die Polymerisation von mindestens einem Alkylenoxid, mindestens einem weiteren Kohlenstoff-Kohlenstoff Doppelbindungshaltigen Monomer und $CO_2$. Terpolymerisation im Sinne der Erfindung schließt insbesondere auch die Copolymerisation von gesamt mehr als drei Monomeren mit ein.

Eine bevorzugte Ausführungsform des erfindungsgemäß einsetzbaren Verfahrens zur Herstellung von Kohlenstoff-Kohlenstoff Doppelbindungen enthaltenden Polyethercarbonatpolyolen (A-1) ist dadurch gekennzeichnet, dass

($\alpha$) [erste Aktivierungsstufe] ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden, wobei der DMC-Katalysator dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen vor oder nach der ersten Aktivierungsstufe zugesetzt wird,

($\beta$) [zweite Aktivierungsstufe] eine Teilmenge (bezogen auf die Gesamtmenge der in den Schritten ($\beta$) und ($\gamma$)

eingesetzten Menge an Alkylenoxiden) von einem oder mehreren Alkylenoxiden zu der aus Schritt (α) resultierenden Mischung zugesetzt wird, wobei die Zugabe einer Teilmenge an Alkylenoxid gegebenenfalls in Gegenwart von $CO_2$ und/oder Inertgas (wie beispielsweise Stickstoff oder Argon) erfolgen kann, und wobei der Schritt (β) auch mehrfach erfolgen kann,

(γ) [Polymerisationsstufe] ein oder mehrere Alkylenoxiden, mindestens einer ungesättigter Verbindung (Alkylenoxid und/oder cyclisches Anhydrid) und Kohlendioxid zu der aus Schritt (β) resultierenden Mischung fortwährend zudosiert werden, wobei die für die Terpolymerisation eingesetzten Alkylenoxide gleich oder von den bei Schritt (β) eingesetzten Alkylenoxiden verschieden sein können.

Im Folgenden wird diese bevorzugte Ausführungsform am Beispiel der Polyethercarbonatpolyole detailliert beschrieben:

Zu Schritt (α):

Die Zugabe der einzelnen Komponenten in Schritt (α) kann gleichzeitig oder nacheinander in beliebiger Reihenfolge erfolgen; bevorzugt wird in Schritt (α) zunächst der DMC-Katalysator vorgelegt und gleichzeitig oder anschließend das Suspensionsmittel, das keine H-funktionellen Gruppen enthält, die H-funktionelle Starterverbindung, das Gemisch aus einem Suspensionsmittel, das keine H-funktionellen Gruppen enthält und der H-funktionellen Starterverbindung oder das Gemisch aus mindestens zwei H-funktionellen Starterverbindungen zugesetzt.

Gegenstand einer bevorzugten Ausführungsform ist ein Verfahren, wobei in Schritt (α) [erste Aktivierungsstufe]

(α1) in einem Reaktor der DMC-Katalysator und ein Suspensionsmittel und/oder eine oder mehrere H-funktionelle Starterverbindungen vorgelegt werden,

(α2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird.

Gegenstand einer weiteren bevorzugten Ausführungsform ist ein Verfahren, wobei in Schritt (α) [erste Aktivierungsstufe]

(α1) ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen, gegebenenfalls unter Inertgasatmosphäre, unter einer Atmosphäre aus Inertgas-Kohlendioxid-Gemisch oder unter einer reinen Kohlendioxid-Atmosphäre, besonders bevorzugt unter Inertgasatmosphäre vorgelegt wird und

(α2) in das resultierende Gemisch aus DMC-Katalysator und dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen bei einer Temperatur von 50 bis 200°C, bevorzugt von 80 bis 160°C, besonders bevorzugt von 125 bis 135°C ein Inertgas, ein Inertgas-Kohlendioxid-Gemisch oder Kohlendioxid, besonders bevorzugt Inertgas eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird,

wobei der Doppelmetallcyanid-Katalysator zu dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen in Schritt (α1) oder unmittelbar anschließend in Schritt (α2) zugesetzt werden kann.

Der DMC-Katalysator kann in fester Form oder in einem Suspensionsmittel und/oder einer H-funktionellen Starterverbindung suspendiert zugegeben werden. Wird der DMC-Katalysator als Suspension zugegeben, wird diese bevorzugt in Schritt (α1) dem Suspensionsmittel und/oder der einen oder mehreren H-funktionellen Starterverbindungen zugefügt.

Zu Schritt (β):

Der Schritt (β) der zweiten Aktivierungsstufe kann in Gegenwart von $CO_2$ und/oder Inertgas erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des Alkylenoxids kann bei einem beliebig zuvor gewählten Vordruck erfolgen. Als Gesamtdruck (absolut) der Atmosphäre wird in Schritt (β) vorzugsweise im Bereich von 10 mbar bis 100 bar, vorzugsweise 100 mbar bis 50 bar und weiterhin bevorzugt 500 mbar bis 50 bar eingestellt. Gegebenenfalls wird während oder nach der Dosierung des Alkylenoxids der Druck durch Einleiten weiteren Kohlendioxids nachgeregelt, wobei der Druck (absolut) 10 mbar bis 100 bar, vorzugsweise 100 mbar bis 50 bar und bevorzugt 500 mbar bis 50 bar beträgt.

In einer bevorzugten Ausführungsform beträgt die bei der Aktivierung in Schritt (β) eingesetzte Menge an einem oder mehreren Alkylenoxiden 0,1 bis 25,0 Gew.-%, bevorzugt 1,0 bis 20,0 Gew.-%, besonders bevorzugt 2,0 bis 16,0 Gew.-%, bezogen auf die im Schritt (α) eingesetzte Menge an Suspensionsmittel und/oder H-funktioneller Starterverbindung. Das Alkylenoxid kann in einem Schritt oder schrittweise in mehreren Teilmengen zugegeben werden.

In einer besonders bevorzugten Ausführungsform der Erfindung wird bei der Aktivierung in Schritt (β) [zweite Aktivierungsstufe] eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt, wobei die Zugabe einer Teilmenge an Alkylenoxid gegebenenfalls in Gegenwart von $CO_2$ und/oder Inertgas erfolgen kann. Der Schritt (β) kann auch mehrfach erfolgen. Der DMC-Katalysator wird vorzugsweise in einer Menge eingesetzt, so dass der Gehalt an DMC-Katalysator im resultierenden Doppelbindungen enthaltenden Polyethercarbonatpolyol 10 ppm bis 10000 ppm, besonders bevorzugt 20 ppm bis 5000 ppm und höchst bevorzugt 50 ppm bis 500 ppm beträgt.

Im zweiten Aktivierungsschritt kann das Alkylenoxid beispielsweise in einer Portion oder innerhalb von 1 bis 15 Minuten, vorzugsweise 5 bis 10 Minuten zugegeben. Die Dauer des zweiten Aktivierungsschritts beträgt bevorzugt 15 bis 240 Minuten, besonders bevorzugt 20 bis 60 Minuten.

Zu Schritt (γ):

Die Dosierung des oder der Alkylenoxide, der ungesättigten Verbindungen, im Folgenden auch als Monomere bezeichnet, und des Kohlendioxids kann simultan, wechselweise oder sequentiell erfolgen, wobei die gesamte Kohlendioxidmenge auf einmal oder über die Reaktionszeit dosiert zugegeben werden kann. Es ist möglich, während der Zugabe der Monomere den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung der Monomere kann simultan, wechselweise oder sequentiell zur Kohlendioxid-Dosierung erfolgen. Es ist möglich, die Monomere mit einer konstanten Dosierrate zu dosieren oder die Dosierrate kontinuierlich oder schrittweise zu steigern oder zu senken oder die Monomere portionsweise zuzugeben. Bevorzugt werden die Monomere mit konstanter Dosierrate dem Reaktionsgemisch zugegeben. Werden mehrere Alkylenoxide zur Synthese der Doppelbindungen enthaltenden Polyethercarbonatpolyole eingesetzt, so können die Alkylenoxide einzeln oder als Gemisch zudosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Monomere und/oder des Kohlendioxids ist es möglich, statistische, alternierende, blockartige oder gradientenartige Doppelbindungen enthaltende Polyethercarbonatpolyole zu synthetisieren.

Vorzugsweise wird ein Überschuss an Kohlendioxid bezogen auf die berechnete Menge an benötigtem Kohlendioxid in Doppelbindungen enthaltenden Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Doppelbindungen enthaltenden Polyethercarbonatpolyole als vorteilhaft erwiesen. Es ist möglich, das Kohlendioxid dem Reaktionsbehälter kontinuierlich oder diskontinuierlich zuzuführen. Dies hängt davon ab, wie schnell die Monomere und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Konzentration des Kohlendioxids kann bei der Zugabe der Monomere ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch

(i) Begasung des Reaktionsgemisches im Reaktor von unten,

(ii) Verwendung eines Hohlwellenrührers,

(iii) eine Kombination aus den Dosierungen gemäß (i) und (ii), und/oder

(iv) Begasung über die Flüssigkeitsoberfläche durch Einsatz mehrstufiger ausgeführter Rührorgane.

Schritt (γ) wird beispielsweise bei Temperaturen von 60 bis 150°C, vorzugsweise von 80 bis 120°C, ganz besonders bevorzugt von 90 bis 110°C durchgeführt. Werden Temperaturen unterhalb von 60°C eingestellt, kommt die Reaktion zum Erliegen. Bei Temperaturen oberhalb von 150°C steigt die Menge an unerwünschten Nebenprodukten stark an.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchte Monomere) aus dem über der Reaktionsmischung befindlichen Gasraum abgesaugt und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Monomeren, wieder in das Reaktionsgemisches gemäß (i), (ii), (iii) und/oder (iv) eingeleitet.

Bevorzugt wird der Druckabfall, welcher über Einbau des Kohlendioxids, der Monomere bei der Terpolymerisation in das Reaktionsprodukt entsteht, über frisch zudosiertes Kohlendioxid ausgeglichen.

Die Einleitung der Monomere kann separat oder zusammen mit dem $CO_2$ sowohl über die Flüssigkeitsoberfläche oder direkt in die flüssige Phase erfolgen. Bevorzugt erfolgt die Einleitung der Monomere direkt in die flüssige Phase, da dies den Vorteil hat, dass eine rasche Durchmischung der eingebrachten Monomere mit der flüssigen Phase erfolgt und so lokale Konzentrationsspitzen der Monomere vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor und Schlaufenreaktor. Werden die Reaktionsschritte (α), (β) und (γ) in unterschiedlichen Reaktoren durchgeführt, kann für jeden Schritt ein unterschiedlicher Reaktortyp verwenden werden.

Doppelbindungen enthaltende Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit der Monomere zu achten. Sie ist so einzustellen, dass trotz der inhibierenden Wirkung des Kohlendioxids die Monomere genügend schnell abreagieren. Die Konzentration an freien Monomeren in der Reaktionsmischung während der zweiten Aktivierungsstufe (Schritt β) beträgt vorzugsweise > 0 bis 100 Gew.-%, besonders bevorzugt > 0 bis 50 Gew.-%, höchst bevorzugt > 0 bis 20 Gew.-% (jeweils bezogen auf das Gewicht der Reaktionsmischung). Die Konzentration an freien Monomeren in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

Eine weitere mögliche Ausführungsform für die Copolymerisation (Schritt γ) ist dadurch gekennzeichnet, dass auch eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen auf die gesamte Menge an H-funktionellen Starterverbindungen).

In einer bevorzugten Ausführungsform wird die gemäß den Schritten ($\alpha$) und ($\beta$) aktivierte Katalysator-Starter-Mischung in demselben Reaktor weiter mit den Monomeren und Kohlendioxid umgesetzt. In einer weiteren bevorzugten Ausführungsform wird die gemäß den Schritten ($\alpha$) und ($\beta$) aktivierte Katalysator-Starter-Mischung in einem anderen Reaktionsbehältnis (beispielsweise einem Rührkessel, Rohrreaktor oder Schlaufenreaktor) weiter mit den Monomeren und Kohlendioxid umgesetzt. In einer weiteren bevorzugten Ausführungsform wird die gemäß dem Schritt ($\alpha$) vorbereitete Katalysator-Starter-Mischung in einem anderen Reaktionsbehältnis (beispielsweise einem Rührkessel, Rohrreaktor oder Schlaufenreaktor) gemäß den Schritten ($\beta$) und ($\gamma$) mit den Monomeren und Kohlendioxid umgesetzt.

Bei Reaktionsführung in einem Rohrreaktor werden die gemäß Schritt ($\alpha$) vorbereitete Katalysator-Starter-Mischung oder die gemäß der Schritte ($\alpha$) und ($\beta$) aktivierte Katalysator-Starter-Mischung und gegebenenfalls weitere Starter sowie die Monomeren und Kohlendioxid kontinuierlich durch ein Rohr gepumpt. Bei Verwendung einer gemäß Schritt ($\alpha$) vorbereiteten Katalysator-Starter-Mischung erfolgt die zweite Aktivierungsstufe gemäß Schritt ($\beta$) im ersten Teil des Rohrreaktors und die Terpolymerisation gemäß Schritt ($\gamma$) im zweiten Teil des Rohrreaktors. Die molaren Verhältnisse der Reaktionspartner variieren je nach gewünschtem Polymer.

In einer Verfahrensvariante wird Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang des Reaktors angeordnet sind, in dem Reaktor eingebracht werden. Eine Teilmenge der Monomere kann am Eingang des Reaktors eingebracht werden. Die Restmenge der Monomere wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut oder Mischer-Wärmetauscherelemente, die gleichzeitig die Durchmischung und Wärmeabfuhr verbessern. Bevorzugt wird durch die Mischelemente zudosiertes $CO_2$ und die Monomere mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Doppelbindungen enthaltenden Polyethercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um einen vollständigen Umsatz zu realisieren, kann dem Reaktionsapparat, in dem der Schritt ($\gamma$) durchgeführt wird, häufig ein weiterer Kessel oder ein Rohr ("Verweilrohr") nachgeschaltet sein, in dem nach der Reaktion vorhandene Restkonzentrationen freier Monomere abreagieren. Bevorzugt liegt der Druck in diesem nachgeschalteten Reaktor bei demselben Druck wie in dem Reaktionsapparat, in dem der Reaktionsschritt ($\gamma$) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt ($\gamma$) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.-% an Monomeren. Die Nachreaktionszeit bzw. die Verweilzeit im nachgeschalteten Reaktor beträgt bevorzugt 10 min bis 24 h, besonders bevorzugt 10 min bis 3 h.

In einer weiteren bevorzugten Ausführungsform des Verfahrens zur Herstellung der Polyethercarbonatpolyolen kann die Temperatur im Schritt ($\gamma$) größer oder gleich 60°C und kleiner oder gleich 150 °C betragen. In einer besonders bevorzugten Ausführungsform des Verfahrens kann die Temperatur im Schritt ($\gamma$) größer oder gleich 80°C und kleiner oder gleich 130 °C und ganz besonders bevorzugt größer oder gleich 90°C und kleiner oder gleich 120 °C betragen. Dieser Temperaturbereich während der Polymerisation hat sich als besonders geeignet erwiesen, um mit einer hinreichenden Reaktionsgeschwindigkeit und mit einer hohen Selektivität die Polyethercarbonatpolyole mit ungesättigten Gruppen zu synthetisieren. Im Bereich niedrigerer Temperaturen kann sich eine nur ungenügende Reaktionsgeschwindigkeit einstellen und bei höheren Temperaturen kann der Anteil an unerwünschten Nebenprodukten zu stark ansteigen. Beispielsweise kann es bei Wahl zu hoher Temperaturen zu einer vorzeitigen Vernetzung der ungesättigten Gruppen kommen.

Die erfindungsgemäß erhältlichen Doppelbindungen enthaltenden Polyethercarbonatpolyole haben vorzugsweise eine durchschnittliche OH-Funktionalität (d.h. durchschnittliche Anzahl von OH-Gruppen pro Molekül) von mindestens 1, bevorzugt von 1,5 bis 10, besonders bevorzugt von $\geq 2,0$ bis $\leq 4,0$.

Das Molekulargewicht der erhaltenen Doppelbindungen enthaltenden Polyethercarbonatpolyole beträgt bevorzugt mindestens 400 g/mol, besonders bevorzugt 400 bis 1’000’000 g/mol und höchst bevorzugt 500 bis 60’000 g/mol.

Die Suspensionsmittel, die in Schritt (α) zum Suspendieren des Katalysators eingesetzt werden, enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel, die in Schritt (α) zum Suspendieren des Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie ß-Propiolacton, ß-Butyrolacton, ß-Isovalerolacton, ß-Caprolacton, ß-Isocaprolacton, ß-Methyl-ß-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1 -on, 6,7-Dimethoxy-1 ,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7*E*)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Alkylenoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

In einer Ausgestaltung des erfindungsgemäßen Verfahrens beträgt das molare Verhältnis der Kohlenstoff-Kohlenstoff Doppelbindungen im Polyethercarbonatpolyol zu den Si-H Bindungen der Polysiloxanverbindung von 1:10 bis 10:1, bevorzugt von 1:5 bis 5:1.

In einer Ausgestaltung des erfindungsgemäßen Verfahrens ist der Katalysator (A) ein Hydrosilylierungskatalysator.

Die Hydrosilylierung des Polyethercarbonats mit ungesättigten Gruppen kann besonders schnell und effektiv durch den Einsatz von Platin- und Palladiumkatalysatoren in einer Konzentration von 1 bis 5000 ppm induziert werden, wobei homogene und heterogene Katalysatoren zur Anwendung kommen können. Geeignete Katalysatoren sind in der DE 102011076687 genannt. Bei den homogenen Katalysatoren sind Karstedt-Katalysatoren bevorzugt. Dies sind Komplexe des Pt(0) mit doppelbindungshaltigen Verbindungen, insbesondere Vinylsilanen, wie Tetramethyldivinyldisiloxan oder Tetramethyltetravinylcyclotetrasiloxan). Diese sind z.B. in der Patinium Metals Review (1997), 41(2), 66 beschrieben. Desweiteren können auch Speier-Katalysatoren, d.h. Komplexe der Hexachloroplatinsäure mit Alkoholen, wie Isopropanol, eingesetzt werden. Besonders bevorzugt können Karstedt-Katalysatoren eingesetzt werden. Bevorzugt bei den heterogenen Katalysatoren sind Platinmetalle, besonders bevorzugt Platin, geträgert auf anorganischen Trägern oder Kohle, besonders bevorzugt auf Kohle. Den heterogenen Katalysatoren können noch Liganden, wie Phosphine oder Stickstoffheterocyclen, als Aktivatoren oder Co-Katalysatoren zugesetzt werden. Eine Vorschrift für die Hydrosilylierung von AlkenGruppen findet sich beispielsweise in F. Eckstorff, Y. Zhu, R. Maurer, T. E. Müller, S. Scholz, J. A. Lercher, Polymer 52 (2011) 2492-2498.

In einer bevorzugten Ausgestaltung des erfindungsgemäßen Verfahrens ist der Hydrosilylierungskatalysator eine oder mehrereVerbindung(en) ist und ausgewählt wird aus der Gruppe bestehend aus Karstedt-Katalysatoren, Speier-Katalysatoren, elementarem Platin und elementarem Platin auf einem Träger aus Aktivkohle oder Aluminiumoxid.

In einer bevorzugten Ausgestaltung des erfindungsgemäßen Verfahrens ist der Hydrosilylierungskatalysator eine oder mehrere Verbindung(en) ist und ausgewählt wird aus der Gruppe bestehend aus Platin(0)-1,3-divinyl-1,1,3,3-tetramethyldisiloxan, Hexachlorpplatinsäure, Pentamethylcyclopentadienyl-tris(acetonitril)-ruthenium(II) hexafluorophosphat, Bis(1,5-cyclooctadiene)rhodium(I) tetrafluoroborat, (Bicyclo[2.2.1]hepta-2,5-diene)rhodium(I)chlorid-Dimer, Tris(triphenylphosphine)rhodium(I) chlorid, Benzenedichlororuthenium(II)-Dimer, Dichloro(p-cymene)ruthenium(II)-Dimer und Benzylidenebis(tricyclohexylphosphine)dichlororuthenium(II).

Ein weiterer Gegenstand der Erfindung ist ein Organooxysilyl-vernetztes Polymer , erhältlich durch das erfindungsgemäße Verfahren, wobei das Organooxysilyl-Endgruppen ein zahlenmittleren Molekulargewicht Mn von $\geq$ 500 g/mol bis $\leq$ 100000 g/mol besonders bevorzugt $\geq$ 1000 g/mol bis $\leq$ 50000 g/mol aufweist, welche mittels GPC bestimmt worden ist.

## Beispiele

| | |
|---|---|
| PET-1 | difunktionelles Poly(oxypropylen)polyol mit einer OH-Zahl von 112 $mg_{KOH}/g$ |
| PO | Propylenoxid der Firma Chemgas, Reinheit > 99 % |
| AGE | Allylglycidylether der Firma Sigma Aldrich, Reinheit > 99 % |
| MSA | Maleinsäureanhydrid der Firma Sigma Aldrich, Reinheit > 99 % |

Der DMC-Katalysator wurde hergestellt nach Beispiel 6 der WO-A 01/80994.

*Eingesetzte Polysiloxan*

Polysiloxan-1: Polysiloxan der Firma Momentive, Silan (Si-H) gehalt von 0,55 mmol/g; Mn von 900 g/mol

Polysiloxan-2: Polysiloxan der Firma Momentive, Silan (Si-H) gehalt von 3,80 mmol/g; Mn von 1280 g/mol

*Eingesetzte Katalysatoren*

Karstedt Katalysator (2,0 Gew% Pt in Xylol) der Firma Sigma-Aldrich

*Eingesetzte Polyoxyalkylenpolyole*

Herstellung eines difunktionellen elektronenreiche Doppelbindungen enthaltenden Polyoxyalkylenpolyols (Polyol-1)

In einem 970 ml Druckreaktor ausgestattet mit einem Gaseintragsrührer wurde eine Mischung aus DMC-Katalysator (48 mg) und PET-1 (80 g) vorgelegt und 30 min bei 130°C in einem partiellen Vakuum (50 mbar) unter Durchleiten von Argon durch die Reaktionsmischung gerührt. Nach Aufpressen von 15 bar $CO_2$, wobei ein leichter Temperaturabfall zu beobachten war, und Wiedererreichen einer Temperatur von 130°C wurden 8,0 g einer Monomermischung (16,7 Gew.-% Allylglycidylether [entsprechend 9,3 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 8,0 g der Monomermischung wurde ein zweites und drittes Mal wiederholt. Nach Abkühlen auf 100°C wurden weitere 136,0 g der Monomermischung (16,7 Gew.-% Allylglycidylether) über eine HPLC-Pumpe (1 ml/min) zudosiert, wobei der $CO_2$ Druck konstant auf 15 bar gehalten wurde. Anschließend wurde die Reaktionsmischung weitere 1 h bei 100°C gerührt. Die Reaktion wurde durch Kühlung des Reaktors mit Eiswasser gestoppt.

Charakterisierung des erhaltenen Polyoxyalkylenpolyols gemäß den in WO 2015032737 A1 genannten Methoden ergab eine OH-Zahl von 27,2 $mg_{KOH}$/g, einen $CO_2$-Gehalt von 12,79 Gew.-%, ein Molekulargewicht $M_n$ von 4566 g/mol, einen Polydispersionsindex (PDI) von 1,33 und einen Doppelbindungsanteil von 2,2 Gew.-%.

Herstellung eines difunktionellen elektronenarme Doppelbindungen enthaltenden Polyoxyalkylenpolyols (Polyol-2)

In einem 970 ml Druckreaktor ausgestattet mit einem Gaseintragsrührer wurde eine Mischung aus DMC-Katalysator (70 mg) und PET-1 (80 g) vorgelegt und 30 min bei 130°C in einem partiellen Vakuum (50 mbar) unter Durchleiten von Argon durch die Reaktionsmischung gerührt. Nach Aufpressen von 15 bar $CO_2$, wobei ein leichter Temperaturabfall zu beobachten war, und Wiedererreichen einer Temperatur von 130°C wurden 80 g einer Monomermischung (11,0 Gew.-% Maleinsäureanhydrid [entsprechend 6,8 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 8,0 g der Monomermischung wurde ein zweites und drittes Mal wiederholt. Nach Abkühlen auf 100°C wurden weitere 246,0 g der Monomermischung (11,0 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 1 h bei 100°C gerührt. Die Reaktion wurde durch Kühlung des Reaktors mit Eiswasser gestoppt.

Charakterisierung des erhaltenen Polyoxyalkylenpolyols gemäß den in WO 2015032737 A1 genannten Methoden ergab eine OH-Zahl von 22,4 $mg_{KOH}$/g, einen $CO_2$-Gehalt von 15,92 Gew.-%, ein Molekulargewicht $M_n$ von 5009 g/mol, einen PDI von 1,9 und einen Doppelbindungsanteil von 2,2 Gew.-%.

Methoden:

Für die rheologische Bestimmung des Gel-Punktes wurde eine Probe des Polyethercarbonatpolyols mit einer substöchiometrischen Menge eines Polysiloxans und Platinum(0)-1,3-divinyl-1,1,3,3-tetramethyldisiloxane versetzt. Das Scherverhalten wurde auf einem Physica MCR501 der Firma Anton Paar ausgestattet mit Meßsystem PP15 vermessen. Die komplexen Moduli G' (Speichermodul) und G" (Verlustmodul) wurden in einer Oszillationsmessung bei 90 °C und einer Frequenz von 1 Hz bestimmt, wobei eine Platte-Platte-Konfiguration mit einem Plattendurchmesser von 15 mm, einem Plattenabstand von 1 mm und einer 10 prozentigen Deformation verwendet wurden. Der Gel-Punkt wurde als der Zeitpunkt definiert, an welchem Speicher- und Verlustmodul gleich groß war.

Für die rheologische Bestimmung der Gel-Zeit wurde eine Probe des Polyethercarbonatpolyols mit einer äquimolaren Menge eines Polyisocyanates (Diisocyanat und/oder Triisocyanat) und Dibutylzinnlaurat (1 Gew.-%) versetzt. Die komplexen Moduli G' (Speichermodul) und G" (Verlustmodul) wurden in einer Oszillationsmessung bei 60°C und einer Frequenz von 1 Hz bestimmt, wobei eine Platte-Platte-Konfiguration mit einem Plattendurchmesser von 15 mm, einem Plattenabstand von 1 mm und einer 10 prozentigen Deformation verwendet wurden. Der Gel-Punkt wurde als der Zeitpunkt definiert, an dem Speichermodul (G') und Verlustmodul (G") gleich groß sind (G'/G"=1). Zur Bestimmung des Speichermoduls (G') nach 2 Stunden wurde der Wert des zu dieser Zeit erreichten Speichermoduls, gemessen in Pa, abgelesen.

Für die rheologische Bestimmung der Adhäsionsbruchenergie (Klebekraft) wurde eine Probe des Präpolymers auf der Messplatte des Rheometers aufgebracht. Die Reißkraft (FN) und die Reißdehnung (d) wurden in einer Klebekraftsmessung bei 30°C bestimmt, wobei eine Platte-Platte-Konfiguration mit einem Plattendurchmesser von 15 mm

und einem Plattenabstand von 0,8 mm verwendet wurden. Die Probe wurde zunächst mit einer Kompressionskraft von 10 N gepresst. Anschließend wurde die obere Platte mit einer Geschwindigkeit von -2,5 mm/s abgehoben und die Reißkraft (FN) über die inkrementelle Distanzen di bis zum Bruch der Probe bestimmt. Die Adhäsionsbruchenergie wurde gemäß der nachfolgenden Formel berechnet, wobei "r" der Radius der oberen Platte ist (r = 7,5 mm), und ist in N/mm angegeben.

$$E_{ad} = \Sigma_i(F_{N,i} \times d_i / \pi) / (r^2 \times \pi)$$

Die Infrarot (IR)-spektroskopischen Messungen erfolgten auf einem Bruker Alpha-P FT-IR-Spektrometer; die Messungen erfolgten in Reinsubstanz; angegeben ist die Wellenzahl des Maximums des Signales für die C=C-Streckschwingung.

Der Doppelbindungsgehalt der Präpolymere ergibt sich als der Quotient des angegebenen Doppelbindungsgehalts der eingesetzten Polyethercarbonatpolyole (angegeben in C2H4 Äquivalenten pro Masse Polyethercarbonatpolyol) bezogen auf die Gesamtmasse der eingesetzten Reaktanden (Polyethercarbonatpolyol, Isocyanatmischung, Katalysator) und ist in C2H4 Äquivalenten pro Masse Präpolymer angegeben.

**Beispiel 1: Herstellung einer Elastomer-Vorstufe unter Einsatz eines ungesättigten Polyethercarbonatpolyols (Polyol-1) mit 2,2 Gew% Doppelbindungen und Polysiloxan-1 im molaren Verhältnis 4 Doppelbindungen (C=C): 1 Silan (Si-H)**

In einer Bördelflasche wurden Polysilan 1 (38 g) und Platinum(0)-1,3-divinyl-1,1,3,3-tetramethyldisiloxane (19 mg) mit einander vermengt (Mischung 1).

In einem Wägeschiff wurden Polyol-1 (500 mg) und Mischung 1 (380 mg) vermischt. Anschließend wurde die Mischung auf das Meßsystem des Rheometers aufgebracht und über 120 min das Härtungsverhalten bei 90°C verfolgt.

**Beispiel 2: Herstellung einer Elastomer-Vorstufe unter Einsatz eines ungesättigten Polyethercarbonatpolyols (Polyol-1) mit 2,2 Gew% Doppelbindungen (C=C) und Polysiloxan-2 im molaren Verhältnis 4 Doppelbindungen : 1 Silan (Si-H)**

In einer Bördelflasche wurden Polysiloxan 2 (5.6 g) und Platinum(0)-1,3-divinyl-1,1,3,3-tetramethyldisiloxane (19 mg) mit einander vermengt (Mischung 2).

In einem Wägeschiff wurden Polyol-1 (500 mg) und Mischung 2 (56 mg) vermischt. Anschließend wurde die Mischung auf das Meßsystem des Rheometers aufgebracht und über 120 min das Härtungsverhalten bei 90°C verfolgt.

**Beispiel 3 (Vgl.): Herstellung einer Elastomer-Vorstufe unter Einsatz eines ungesättigten Polyethercarbonatpolyols (Polyol-1) mit 2,2 Gew% Doppelbindungen und Schwefel im molaren Verhältnis 4 Doppelbindungen (C=C) : 1 $S_8$-Einheit**

In einem Wägeschiff wurden Polyol-1 (500 mg) und elementarer Schwefel (50 mg) vermischt. Anschließend wurde die Mischung auf das Meßsystem des Rheometers aufgebracht und über 120 min das Härtungsverhalten bei 90°C verfolgt.

Analyse über IR Spektroskopie zeigte das charakteristische Signal für Doppelbindungen bei 1645 $cm^{-1}$.

**Beispiel 4 (Vgl.): Herstellung einer Elastomer-Vorstufe unter Einsatz eines ungesättigten Polyethercarbonatpolyols (Polyol-1) mit 2,2 Gew% Doppelbindungen (C=C)**

Polyol-1 (500 mg) wurde mit 60 ppm Katalysator versehen auf das Meßsystem des Rheometers aufgebracht und über 120 min das Härtungsverhalten bei 90°C verfolgt.

Analyse über IR Spektroskopie zeigte das charakteristische Signal für Doppelbindungen bei 1645 $cm^{-1}$.

**Tabelle 1**

| Beispiel | Polyethercarbonatpolyol | Vernetzer | Molares Verhältnis von (C=C) zu (Si-H)[a)] | Gel-Punkt [s] | G' nach 2 h [Pa] |
|---|---|---|---|---|---|
| 1 | Polyol-1 | Polysiloxan-1 | 4:1 | 1230 | 3380 |

(fortgesetzt)

| Beispiel | Polyethercarbonatpolyol | Vernetzer | Molares Verhältnis von (C=C) zu (Si-H)[a)] | Gel-Punkt [s] | G' nach 2 h [Pa] |
|---|---|---|---|---|---|
| 2 | Polyol-1 | Polysiloxan-2 | 4:1 | < 60 | 4900 |
| 3 (Vgl.) | Polyol-1 | Schwefel | Keine Aushärtung | Keine Aushärtung | 0 |
| 4 (Vgl.) | Polyol-1 | -- | Keine Aushärtung | Keine Aushärtung | 0 |
| Vgl.: Vergleichsbeispiel; [a)] molares Verhältnis der Kohlenstoff-Kohlenstoff Doppelbindungen (C=C) im Polyethercarbonatpolyol zu den Si-H Bindungen der Polysiloxanverbindung | | | | | |

Die Beispiele 1 - 4 zeigen, dass die Vernetzung von elektronenreichen Polyethercarbonatpolyolen mit substöchiometrisch eines Polysiloxans zu dem Aufbau eines 3D-Netzwerkes führt. Die Reaktion mit siloxanreicheren Verbindungen (Beispiel. 1-2) führt hierbei in kürzerer Zeit zu einem stabileren Netzwerk. Die Reaktion mit Schwefel als Vernetzer oder ohne jeglichen Vernetzer konnte nicht beobachtet werden. Ohne Siloxanverbindungen härtet das Polyol 1 nicht aus (Vergleichsbeispiel 3-4).

**Beispiel 5: Herstellung einer Elastomer-Vorstufe unter Einsatz eines ungesättigten Polyethercarbonatpolyols (Polyol-1) mit 2,2 Gew% Doppelbindungen und Polysiloxan-1 im molaren Verhältnis 2 Doppelbindungen (C=C) : 1 Silan (Si-H)**

In einer Bördelflasche wurden Polysiloxan 1 (38 g) und Platinum(0)-1,3-divinyl-1,1,3,3-tetramethyldisiloxane (9.5 mg) mit einander vermengt (Mischung 3).

In einem Wägeschiff wurden Polyol-1 (500 mg) und Mischung 3 (760 mg) vermischt. Anschließend wurde die Mischung auf das Meßsystem des Rheometers aufgebracht und über 120 min das Härtungsverhalten bei 90°C verfolgt.

**Beispiel 6: Herstellung einer Elastomer-Vorstufe unter Einsatz eines ungesättigten Polyethercarbonatpolyols (Polyol-1) mit 2,2 Gew% Doppelbindungen und Polysiloxan-2 im molaren Verhältnis 2 Doppelbindungen (C=C) : 1 Silan (Si-H)**

In einer Bördelflasche wurden Polysiloxan 2 (5.6 g) und Platinum(0)-1,3-divinyl-1,1,3,3-tetramethyldisiloxane (9.5 mg) mit einander vermengt (Mischung 4).

In einem Wägeschiff wurden Polyol-1 (500 mg) und Mischung 4 (120 mg) vermischt. Anschließend wurde die Mischung auf das Meßsystem des Rheometers aufgebracht und über 120 min das Härtungsverhalten bei 90°C verfolgt.

**Tabelle 2**

| Beispiel | Polyethercarbonatpolyol | Vernetzer | Molares Verhältnis von (C=C) zu (Si-H) [a)] | Gel-Punkt [s] | G' nach 2 h [Pa] |
|---|---|---|---|---|---|
| 5 | Polyol-1 | Polysiloxan-1 | 2:1 | < 60 | 8800 |
| 6 | Polyol-1 | Polysiloxan-2 | 2:1 | <60 | 930 |
| 4 (Vgl.) | Polyol-1 | -- | Keine Aushärtung | Keine Aushärtung | 0 |
| Vgl.: Vergleichsbeispiel; [a)] molares Verhältnis der Kohlenstoff-Kohlenstoff Doppelbindungen (C=C) im Polyethercarbonatpolyol zu den Si-H Bindungen der Polysiloxanverbindung | | | | | |

Die Beispiele 5 - 6 zeigen, dass die Veränderung des Verhältnisses zwischen Doppelbindung und Siloxan zu einer unterschiedlichen Netzwerkdichte, sowie Reaktionszeit führt. Bei verdoppeltem Silangehalt steigt die Stabilität des ausgebildeten Netzwerkes überproportional an, während die Reaktionszeit deutlich sinkt.

**Beispiel 7: Herstellung einer Elastomer-Vorstufe unter Einsatz eines ungesättigten Polyethercarbonatpolyols (Polyol-1) mit 2,2 Gew% Doppelbindungen und Polysiloxan-1 im molaren Verhältnis 1 Doppelbindungen (C=C) : 1 Silan (Si-H)**

In einer Bördelflasche wurden Polysiloxan 1 (38 g) und Platinum(0)-1,3-divinyl-1,1,3,3-tetramethyldisiloxane (4.5 mg) mit einander vermengt (Mischung 5).

In einem Wägeschiff wurden Polyol-1 (500 mg) und Mischung 5 (1.52 g) vermischt. Anschließend wurde die Mischung auf das Meßsystem des Rheometers aufgebracht und über 120 min das Härtungsverhalten bei 90°C verfolgt.

**Beispiel 8: Herstellung einer Elastomer-Vorstufe unter Einsatz eines ungesättigten Polyethercarbonatpolyols (Polyol-1) mit 2,2 Gew% Doppelbindungen und Polysiloxan-2 im molaren Verhältnis 1 Doppelbindungen (C=C) : 1 Silan (Si-H)**

In einer Bördelflasche wurden Polysiloxan 2 (5.6 g) und Platinum(0)-1,3-divinyl-1,1,3,3-tetramethyldisiloxane (4.5 mg) mit einander vermengt (Mischung 6).

In einem Wägeschiff wurden Polyol-1 (500 mg) und Mischung 6 (240 mg) vermischt. Anschließend wurde die Mischung auf das Meßsystem des Rheometers aufgebracht und über 120 min das Härtungsverhalten bei 90°C verfolgt.

**Tabelle 3**

| Beispiel | Polyethercarbonatpolyol | Vernetzer | Molares Verhältnis von (C=C) zu (Si-H)[a] | Gel-Punkt [s] | G' nach 2 h [Pa] |
|---|---|---|---|---|---|
| 7 | Polyol-1 | Polysiloxan-1 | 1:1 | <60 | 19900 |
| 8 | Polyol-1 | Polysiloxan-2 | 1:1 | <60 | 2950 |
| 4 (Vgl.) | Polyol-1 | -- | Keine Aushärtung | Keine Aushärtung | 0 |
| Vgl.: Vergleichsbeispiel; [a] molares Verhältnis der Kohlenstoff-Kohlenstoff Doppelbindungen (C=C) im Polyethercarbonatpolyol zu den Si-H Bindungen der Polysiloxanverbindung | | | | | |

Die Beispiele 7 - 8 zeigen, dass die Veränderung des Verhältnisses zwischen Doppelbindung und Silan (Si-H) zu einer unterschiedlichen Netzwerkdichte, sowie Reaktionszeit führt. Bei stöchiometrischem Silangehalt steigt die Stabilität des ausgebildeten Netzwerkes ein Maximum annimmt.

**Beispiel 9: Herstellung einer Elastomer-Vorstufe unter Einsatz eines ungesättigten Polyethercarbonatpolyols (Polyol-2) mit 2,2 Gew% Doppelbindungen und Polysiloxan-1 im molaren Verhältnis 1 Doppelbindungen (C=C) : 1 Silan**

In einer Bördelflasche wurden Polysiloxan 1 (38 g) und Platinum(0)-1,3-divinyl-1,1,3,3-tetramethyldisiloxane (4.5 mg) mit einander vermengt (Mischung 7).

In einem Wägeschiff wurden Polyol-2 (500 mg) und Mischung 7 (1.52 g) vermischt. Anschließend wurde die Mischung auf das Meßsystem des Rheometers aufgebracht und über 120 min das Härtungsverhalten bei 140 °C verfolgt.

**Beispiel 10: Herstellung einer Elastomer-Vorstufe unter Einsatz eines ungesättigten Polyethercarbonatpolyols (Polyol-2) mit 2,2 Gew% Doppelbindungen und Polysiloxan-2 im molaren Verhältnis 1 Doppelbindungen (C=C) : 1 Silan**

In einer Bördelflasche wurden Polysiloxan 2 (10.34 g) und Platinum(0)-1,3-divinyl-1,1,3,3-tetramethyldisiloxane (29.21 mg) mit einander vermengt (Mischung 8).

In einem Wägeschiff wurden Polyol-2 (500 mg) und Mischung 8 (103.4 mg) vermischt. Anschließend wurde die Mischung auf das Meßsystem des Rheometers aufgebracht und über 120 min das Härtungsverhalten bei 140 °C verfolgt.

**Beispiel 11 (Vgl.): Herstellung einer Elastomer-Vorstufe unter Einsatz eines ungesättigten Polyethercarbonatpolyols (Polyol-2) mit 2,2 Gew% Doppelbindungen**

Polyol-2 (500 mg) wurde mit 300 ppm Katalysator versehen und auf das Meßsystem des Rheometers aufgebracht und über 120 min das Härtungsverhalten bei 140°C verfolgt.

Analyse über IR Spektroskopie zeigte das charakteristische Signal für Doppelbindungen bei 1645 $cm^{-1}$.

**Tabelle 4**

| Beispiel | Polyethercarbonatpolyol | Vernetzer | Verhältnis von **(C=C)** zu Si-H | Gel-Punkt [s] | G'nach 2 h [Pa] |
|---|---|---|---|---|---|
| 9 | Polyol-2 | Polysiloxan-1 | 1:1 | 150 | 217 |
| 10 | Polyol-2 | Polysiloxan-2 | 1:1 | 6167 | 25,6 |
| 11 (Vgl.) | Polyol-2 | -- | Keine Aushärtung | Keine Aushärtung | 0 |
| Vgl.: Vergleichsbeispiel; | | | | | |

Die Beispiele 8 - 9 zeigen, den Einfluß des gewählten Silan (Si-H) gehalts auf die Gelzeit und die Netzwerkdichte.

## Patentansprüche

1. Verfahren zur Herstellung eines Organooxysilyl-vernetzten Polymers umfassend der Reaktion eines Kohlenstoff-Kohlenstoff Doppelbindungen enthaltenden Polyethercarbonatpolyols, mit einer Polysiloxanverbindung in Gegenwart eines Katalysators (A), wobei die Polysiloxanverbindung mindestens zwei Si-H Bindungen aufweisen.

2. Verfahren gemäß Anspruch 1, wobei die die Polysiloxanverbindung eine $\alpha$-$\omega$ Polysiloxanverbindung ist.

3. Verfahren gemäß Anspruch 2, wobei die $\alpha$-$\omega$ Polysiloxanverbindung eine Struktur gemäß Formel (I) aufweist:

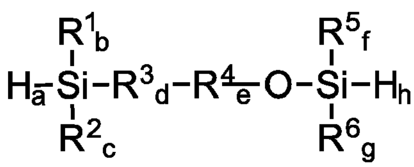

(I)

mit

$$1 \geq a \leq 3;$$

$$1 \geq h \leq 3;$$

$$a+b+c=3,\ f+g+h=3;$$

$R^1$, $R^2$, $R^5$, $R^6$ unabhängig voneinander = Alkyl, Aryl, Cycloalkyl bevorzugt: Alkyl, besonders bevorzugt, Me, Et, Pr;
$R^3$ = O-Si$R^7R^8$;
$R^7$, $R^8$ unabhängig voneinander =Alkyl, Aryl, Cycloalkyl bevorzugt: Alkyl, besonders bevorzugt, Me, Et, Pr;
d=1 bis 100; bevorzugt 5 bis 80;
$R^4$ = O-Si$R^9R^{10}$;
$R^9$, $R^{10}$ unabhängig voneinander =Wasserstoff, Alkyl, Aryl, Cycloalkyl bevorzugt Wasserstoff, Alkyl, besonders bevorzugt Wasserstoff, Me, Et, Pr;
e=1 bis 100; bevorzugt 5 bis 80.

4. Verfahren gemäß Anspruch 3, wobei
$R^1$=$R^2$=$R^3$=$R^4$=$R^5$=Me;
$R^7$=$R^8$=Me
$R^9$= Wasserstoff
$R^{10}$= Me
d= 10 bis 60
e= 10 bis 60

5. Verfahren gemäß einem der Ansprüche 1 bis 4, wobei das Kohlenstoff-Kohlenstoff Doppelbindungen enthaltende Polyethercarbonatpolyol erhältlich durch Anlagerung eines Alkylenoxids, mindestens eines Kohlenstoff-Kohlenstoff Doppelbindungshaltigen Monomers und CO2 an eine H-funktionelle Starterverbindung in Gegenwart eines Doppelmetallcyanidkatalysators.

6. Verfahren gemäß einem der Ansprüche 1 bis 5, wobei das molare Verhältnis der eingesetzten gesättigten Alkylenoxide zu dem mindestens einen weiteren Kohlenstoff-Kohlenstoff Doppelbindungshaltigen Monomer von 55,0 mol-% bis 99,5 mol-%, bevorzugt von 60,0 mol-% bis 99,0 mol-% beträgt.

7. Verfahren gemäß einem der Ansprüche 5 oder 6, wobei das Kohlenstoff-Kohlenstoff Doppelbindungshaltige Monomer ausgewählt wird aus mindestenes einem der Monomere aus einer oder mehrerer der Gruppen bestehend aus

(a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren wie besipeislweise Ölsäure, Linolsäure, Konjuenfettsäure, oder Linolensäure, teilweise epoxidierte Fette und Öle, wie teilweise epoxidiertes Sojaöl, Leinöl, Rapsöl, Palmöl oder Sonnenblumenöl, und/oder deren Mischungen.
(b) Alkylenoxid mit Doppelbindung der allgemeinen Formel (IX) ist:

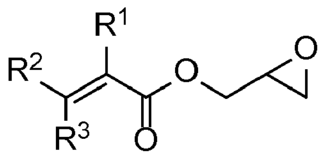
(IX)

wobei $R_1$ bis $R_3$ unabhängig voneinander H, Halogen, substituierte oder nicht-substituierte C1-C22-Alkyl, substituierte oder nicht-substituierte C6-C12 Aryl sind. Die Verbindungen nach obiger Formel (IX) zeigen als bevorzugte Vertreter der Gruppe der Glycidylester $\alpha,\beta$-ungesättigter Säuren ein Substitutionsmuster, welches sich in besonderer Weise zum Aufbau von Polyethercarbonatpolyolen mit ungesättigten Gruppen eignet. Diese Verbindungsklasse lässt sich mittels des erfindungsgemäß einsetzbaren DMC-Katalysators mit hohen Ausbeuten zu Polyethercarbonatpolyolen mit ungesättigten Gruppen umsetzten. Des Weiteren können sich durch die sterischen und elektronischen Voraussetzungen im Bereich der Doppelbindung, gute Möglichkeiten zur weiteren Umsetzung zu höhermolekularen, vernetzten Polyethercarbonatpolyolen ergeben.
(c) cyclisches Anhydrid der Formel (X), (XI) oder (XII) entspricht:

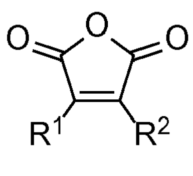
(X)

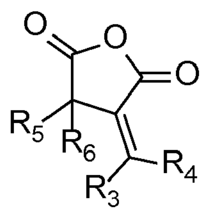
(XI)

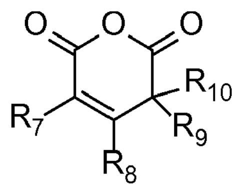
,
(XII)

wobei $R_1$ bis $R_{10}$ unabhängig voneinander H, Halogen, substituierte oder nicht-substituierte C1-C22-Alkyl, substituierte oder nicht-substituierte C6-C12 Aryl sind. Bevorzugte Verbindungen der Formel (IX), (X) (XI) sind Maleinsäureanhydrid, Halogen- oder Alkylsubstituierte Maleinsäureanhydride und Itaconsäureanhydrid.
und

(d) 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenylbernsteinsäureanhydrid und Octadecenylbernsteinsäureanhydrid.

**8.** Verfahren gemäß Anspruch 7, wobei das dKohlenstoff-Kohlenstoff Doppelbindungshaltige Monomer ausgewählt wird aus mindestenes einem der Monomere aus einer oder mehrerer der Gruppen bestehend aus

(a) Allylglycidylether, Vinylcyclohexenoxid und Limonenoxid
(b) Glycidylacrylat und Glycidylmethacrylat,
(c) Maleinsäureanhydrid und Itaconsäureanhydrid
und
(d) 4-Cyclohexen-1,2-disäureanhydrid und 5,6-Norbornen-2,3-disäureanhydrid.

**9.** Verfahren gemäß einem der Ansprüche 1 bis 8, wobei das Kohlenstoff-Kohlenstoff Doppelbindungen enthaltende Polyethercarbonatpolyol einen $CO_2$ Anteil von 0,5 Gew.-% bis 50 Gew.-%, bevorzugt von 5 Gew.-% bis 25 Gew.-% aufweist.

**10.** Verfahren gemäß einem der Ansprüche 1 bis 9, wobei das molare Verhältnis der Kohlenstoff-Kohlenstoff Doppelbindungen im Polyethercarbonatpolyol zu den Si-H Bindungen der Polysiloxanverbindung von 1:10 bis 10:1, bevorzugt von 1:5 bis 5:1 beträgt.

**11.** Verfahren gemäß einem der Ansprüche 1 bis 10, der Katalysators (A) ein Hydrosilylierungskatalysator ist.

**12.** Verfahren gemäß Anspruch 11, wobei der Hydrosilylierungskatalysator eine oder mehrereVerbindung(en) ist und ausgewählt wird aus der Gruppe bestehend aus Karstedt-Katalysatoren, Speier-Katalysatoren, elementarem Platin und elementarem Platin auf einem Träger aus Aktivkohle oder Aluminiumoxid

**13.** Verfahren gemäß Anspruch 11 oder 12, wobei der Hydrosilylierungskatalysator eine oder mehrereVerbindung(en) ist und ausgewählt wird aus der Gruppe bestehend aus Platin(0)-1,3-divinyl-1,1,3,3 -tetramethyldisiloxan, Hexachlorpplatinsäure, Pentamethylcyclopentadienyl-tris(acetonitril)-ruthenium(II) hexafluorophosphat, Bis(1,5-cyclooctadiene)rhodium(I) tetrafluoroborat, (Bicyclo[2.2.1]hepta-2,5-diene)rhodium(I)chlorid-Dimer, Tris(triphenylphosphine)rhodium(I) chlorid, Benzenedichlororuthenium(II)-Dimer, Dichloro(p-cymene)ruthenium(II)-Dimer und Benzylidenebis(tricyclohexylphosphine)dichloro-ruthenium(II).

**14.** Organooxysilyl-vernetztes Polymer , erhältlich durch ein Verfahren gemäß einem der Ansprüche 1 bis 13, wobei das Organooxysilyl-Endgruppen ein zahlenmittleren Molekulargewicht $M_n$ von $\geq$ 500 g/mol bis $\leq$ 100000 g/mol besonders bevorzugt $\geq$ 1000 g/mol bis $\leq$ 50000 g/mol aufweist, welche mittels GPC bestimmt worden ist.

Europäisches Patentamt
European Patent Office
Office européen des brevets

# EUROPÄISCHER RECHERCHENBERICHT

Nummer der Anmeldung
EP 18 18 7627

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2016/046110 A1 (COVESTRO DEUTSCHLAND AG [DE]) 31. März 2016 (2016-03-31)<br>* Seite 3, Zeile 13 - Seite 4, Zeile 9; Anspruch 1 *<br>----- | 1-14 | INV.<br>C08G64/02<br>C08G64/34<br>C08G64/42 |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| Den Haag | 8. Januar 2019 | Hoffmann, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 18 18 7627

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2019

| Im Recherchenbericht angeführtes Patentdokument | Datum der Veröffentlichung | Mitglied(er) der Patentfamilie | Datum der Veröffentlichung |
|---|---|---|---|
| WO 2016046110 A1 | 31-03-2016 | CN 107075105 A | 18-08-2017 |
| | | EP 3197935 A1 | 02-08-2017 |
| | | SG 11201701681T A | 27-04-2017 |
| | | US 2017313816 A1 | 02-11-2017 |
| | | WO 2016046110 A1 | 31-03-2016 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2845872 A1
- WO 2015032645 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- EP 1359177 A
- DE 102011076687
- WO 2015032737 A1

### In der Beschreibung aufgeführte Nicht-Patentliteratur

- **B. INOUE et al.** Copolymerization of Carbon Dioxide and Epoxide with Organometallic Compounds. *Die Makromolekulare Chemie,* 1969, vol. 130, 210-220
- *Beispiel Chemical Communications,* 2011, vol. 47, 141-163
- *Patinium Metals Review,* 1997, vol. 41 (2), 66
- **F. ECKSTORFF ; Y. ZHU ; R. MAURER ; T. E. MÜLLER ; S. SCHOLZ ; J. A. LERCHER.** *Polymer,* 2011, vol. 52, 2492-2498